# EUROPÄISCHE PATENTSCHRIFT

(11) **EP 1 724 483 B1**
(45) Veröffentlichungstag und Bekanntmachung des Hinweises auf die Patenterteilung: **03.06.2009**
(21) Anmeldenummer: 06007939.9
(22) Anmeldetag: 15.04.2006
(51) Int. Cl.: F16D 23/06

(54) **Druckstückeinheit für eine Synchronisiereinrichtung und Synchronisiereinrichtung für Schaltgetriebe, insbesondere für Kraftfahrzeuge**
Pressure piece assembly for a synchromesh device and a synchromesh device for a gearbox, in particular for motor vehicules
Poussoir pour un dispositif de synchronisation et dispositif de synchronisation pour boîte de vitesses, en particulier pour véhicule automobiles

(30) Priorität: 20.05.2005 DE 102005023248
(43) Veröffentlichungstag der Anmeldung: 22.11.2006
(73) Patentinhaber: ZF Friedrichshafen AG, 88038 Friedrichshafen (DE)
(72) Erfinder: König, Jan-Peter, 14550 Gross-Kreutz (DE)

(56) Entgegenhaltungen:
- EP-A- 0 870 941
- EP-A- 1 460 298
- DE-A1- 1 555 158
- DE-C1- 10 006 347
- DE-U1- 20 216 782
- FR-A- 2 803 640

## Beschreibung

Die Erfindung betrifft eine Druckstückeinheit nach dem Oberbegriff des Patentanspruches 1 sowie eine Synchronisiereinrichtung nach dem Oberbegriff des Patentanspruches 12 - jeweils bekannt durch die DE 100 06 347 C1.

Synchronisiereinrichtungen für Schaltgetriebe sind in verschiedenen Bauarten bekannt, wobei der Synchronisiervorgang mit dem so genannten Vor-oder Ansynchronisieren beginnt und über das Synchronisieren und Sperren schließlich zum Formschluss zwischen einer antreibenden Getriebewelle über einen Synchronkörper mit dem zu schaltenden Zahnrad führt. Wie durch die DE 198 34 544 A1 bekannt wurde, erfolgt die Vorsynchronisierung über ein Kugel-Feder-Gleitstein-System, wobei die Kugel über eine Rastverbindung mit einer axial beweglichen Schaltmuffe in Verbindung steht, über welche Synchronringe mit Reibkonus zur Drehzahlangleichung verschoben werden.

Durch die DE 44 13 169 C1 wurde eine Synchronisiereinrichtung bekannt, bei welcher zwischen einer Schaltmuffe und den Synchronringen jeweils ein Biege-Formfeder-Element angeordnet ist, über welches die Axialbewegung der Schaltmuffe beim Ansynchronisieren auf die Synchronringe übertragen wird.

Durch die DE 200 22 345 U1 wurde eine Synchronisiereinrichtung mit einer Druckstückeinheit bekannt, welche aus einem massiven Druckstück, einer Spiraldruckfeder und einer Kugel als Rastelement besteht. Drei dieser Druckstücke sind in Ausnehmungen eines Synchronkörpers angeordnet und stehen über das kugelförmige Rastelement mit einer Schaltmuffe in Rastverbindung. Durch Betätigen der Schaltmuffe in axialer Richtung bewirken die Druckstücke über Synchronringe mit Sperrverzahnung zunächst eine Vorsynchronisierung, danach eine Synchronisierung und schließlich einen Formschluss mit einer Kupplungsverzahnung an dem zu schaltenden Zahnrad. Nachteilig bei dieser Druckstückeinheit ist, dass sie aus mehreren Teilen besteht, die einzeln gefertigt und montiert werden müssen. Insbesondere ist die Herstellung des massiven Druckstückes aufwändig.

Es ist Aufgabe der vorliegenden Erfindung, eine Druckstückeinheit der eingangs genannten Art bezüglich Herstellung und Montage in einer Synchronisiereinrichtung zu vereinfachen. Darüber hinaus ist es Aufgabe der Erfindung, eine Synchronisiereinrichtung der eingangs genannten Art mit einer Druckstückeinheit auszustatten, welche einfach montierbar ist und ein geringes Gewicht aufweist.

Diese Aufgabe wird durch die Merkmale des Patentanspruches 1 gelöst. Erfindungsgemäß ist vorgesehen, dass das Druckstück und das Federelement einstückig ausgebildet sind. Damit wird der Vorteil erreicht, dass die Zahl der Einzelteile der Druckstückeinheit reduziert ist, da eine separate Druckfeder entfällt. Gleichzeitig ergeben sich Vorteile bei der Montage der Druckstückeinheit.

Nach einer vorteilhaften Ausgestaltung der Erfindung werden Druckstück und Federelement als Biege-Stanz-Teil, d. h. durch spanlose Umformung hergestellt. Als Ausgangsmaterial dient ein Blech, welches vorzugsweise aus Federstahl besteht. Als Vorteil ergeben sich hieraus geringe Herstellkosten.

Nach einer weiteren vorteilhaften Ausgestaltung der Erfindung ist das Federelement als Bügel oder Zunge ausgebildet, welche aus der Blechplatine ausgestanzt wird und als zweiseitig eingespannte Biege- oder Blattfeder wirkt.

Nach einer weiteren vorteilhaften Ausgestaltung der Erfindung ist auch das Rastelement einstückig mit dem Federelement und damit mit dem Druckstück ausgebildet. Dies wird durch eine konvexe Ausprägung des mittleren Bereiches des Federelementes erreicht, wobei die konvexe Ausprägung z. B. in Form einer Nase oder eines Nockens in eine entsprechende Vertiefung in der Schaltmuffe eingreift und dort verrastbar ist. Das elastische Andrücken des Rastelementes erfolgt durch das Federelement. Damit wird als Vorteil eine weitere Vereinfachung der Druckstückeinheit (durch Verringerung der Teilezahl infolge Wegfall einer Kugel) sowie eine Kosten- und Gewichtsreduzierung erreicht. Gleichzeitig ergeben sich Vorteile infolge einer einfachen Montage.

Nach einer weiteren vorteilhaften Ausgestaltung der Erfindung ist das Rastelelement als zusätzliches verschleißminderndes Teil ausgebildet, welches vom Federelement aufgenommen und gehalten wird. Dabei ist das Rastelement vorzugsweise als Kugel oder Zylinder ausgebildet und somit drehbar. Damit wird der Vorteil erreicht, dass ein geringerer Verschleiß und eine geringere Reibung beim Schalten auftreten und damit ein höherer Schaltkomfort erzielt wird. Vorteilhafterweise ist das kugel- oder zylinderförmige Rastelement in einem Käfig des Federelementes aufgenommen. Vorteilhaft hierbei ist, dass das Rastelement einfach in das Federelement eingesetzt werden kann und mit diesem unverlierbar ist.

In weiteren vorteilhaften Ausgestaltungen der Erfindung weist das Druckstück seitliche Anschlagflächen in Form von aufgestellten Randstreifen und Lappen auf, wodurch eine Abstützung gegenüber den benachbarten Teilen der Synchronisiereinrichtung in axialer und in tangentialer Richtung erreicht wird. Vorteilhaft hierbei ist ebenfalls, dass die Herstellung infolge der spanlosen Umformung (Biegen) kostengünstig ist.

Die Aufgabe der Erfindung wird auch durch eine Synchronisiereinrichtung mit den Merkmalen des Patentanspruches 12 gelöst, wobei die Druckstückeinheit in entsprechenden Ausnehmungen eines Synchronkörpers eingesetzt und entsprechend den vorgenannten Ausführungen ausgebildet ist. Die Synchronisiereinrichtung wird dadurch vereinfacht, insbesondere wird die Montage der Druckstückeinheit erleichtert, da erfindungsgemäß nur ein Teil-anstelle von drei oder mehr Teilen nach dem Stand der Technik - zu montieren ist. Vorteilhaft ist ferner, dass die Kosten und das Gewicht der Synchronisiereinrichtung durch Verwendung der erfindungsgemäßen Druckstückeinheit reduziert werden, ohne dass die Funktion beeinträchtigt wird.

Ausführungsbeispiele der Erfindung sind in der Zeichnung dargestellt und werden im Folgenden näher beschrieben.
Es zeigen:
- Fig. 1: eine Druckstückeinheit (erstes Ausführungsbeispiel der Erfindung) für eine Synchronisiereinrichtung;
- Fig. 2: die Druckstückeinheit gemäß Fig. 1 in einer Synchronisiereinrichtung;
- Fig. 3a: eine schematische Darstellung der Druckstückeinheit in Neutralstellung;
- Fig. 3b: eine schematische Darstellung mit eingerückter Schaltmuffe;
- Fig. 4: eine Druckstückeinheit mit kugelförmigem Rastelement (zweites Ausführungsbeispiel der Erfindung) für eine Synchronisiereinrichtung;
- Fig. 5: die Druckstückeinheit gemäß Fig. 4, eingebaut in eine Synchronisiereinrichtung;
- Fig. 6a: eine schematische Darstellung der eingerasteten Druckstückeinheit mit Schaltmuffe in Neutralstellung und
- Fig 6b: eine schematische Darstellung der Druckstückeinheit und eingerückter Schaltmuffe.

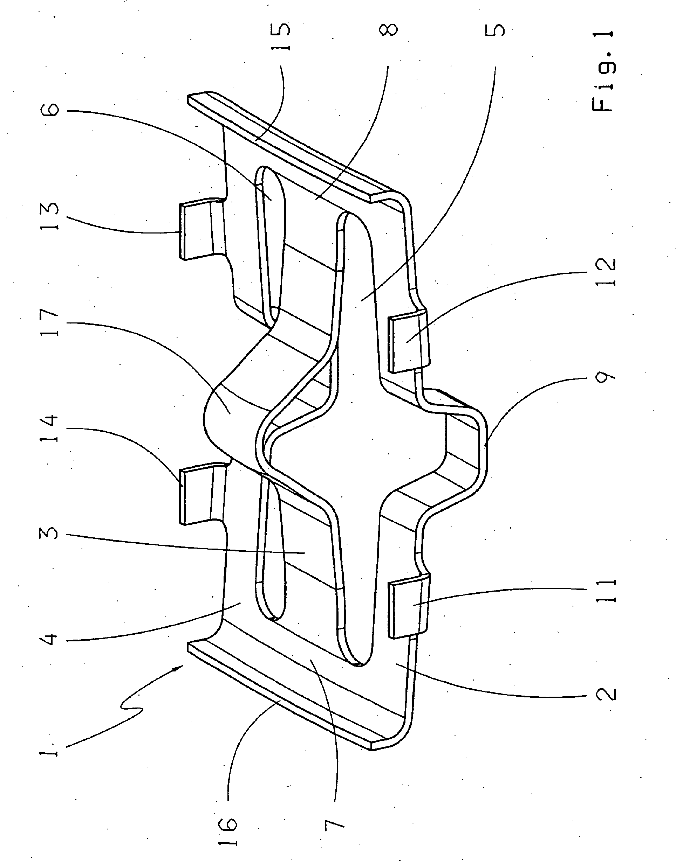

**Fig. 1** zeigt eine Druckstückeinheit 1, welche als Biege-Stanzteil, d. h. durch spanlose Umformung aus einer Blechplatine, vorzugsweise aus Federstahl, hergestellt ist. Die Druckstückeinheit 1 wird - wie anhand der nachfolgenden Figuren gezeigt wird - in eine Synchronisiereinrichtung eines Schaltgetriebes, vorzugsweise für Kraftfahrzeuge eingesetzt. Die Druckstückeinheit 1 ist - in der Draufsicht - etwa rechteckförmig ausgebildet und besteht im Wesentlichen aus drei etwa parallel verlaufenden Blechstreifen 2, 3, 4, welche durch ausgestanzte Langlöcher 5, 6 voneinander getrennt, jedoch endseitig durch Seitenstreifen 7, 8 verbunden sind. Die beiden äußeren Blechstreifen 2, 4 weisen je eine - in der Zeichnung - nach unten gerichtete trogartige Ausprägung 9, 10 auf, welche Auflageflächen der Druckstückeinheit 1 bilden. Ferner sind an den äußeren Blechstreifen 2, 4 nach oben abgewinkelte Lappen 11, 12, 13, 14 angeordnet, welche als seitliche Abstützung am hier nicht dargestellten Synchronkörper wirken. Die Seitenstreifen 7, 8 sind außen umgebogen und bilden aufgestellte Randstreifen 15, 16, welche als Anlagefläche zu hier nicht dargestellten Synchronringen wirken. Der mittlere Blechstreifen 3 ist als Federelement in Form einer zweiseitig eingespannten Biegefeder ausgebildet. Die streifenförmige Biegefeder 3 ist im mittleren Bereich - in der Zeichnung - nach oben zu einer konvexen Ausprägung 17 ausgewölbt, welche ein Rastelement bildet, und zwar zum Eingriff in eine hier nicht dargestellte Schaltmuffe. Das Rastelement 17 ist somit einstückig mit dem Federelement 3 und somit einstückig mit der gesamten Druckstückeinheit 1 ausgebildet. Das Rastelelement 17 ist im dargestellten Ausführungsbeispiel etwa in Form eines Wellenberges oder eines Nockens ausgebildet - andere ballige oder kugelförmige Ausbildungen sind möglich. Die Druckstückeinheit 1 vereinigt somit drei Funktionen in einem Teil, nämlich die Funktion eines Druckstückes, eines Federelementes und eines Rastelementes.

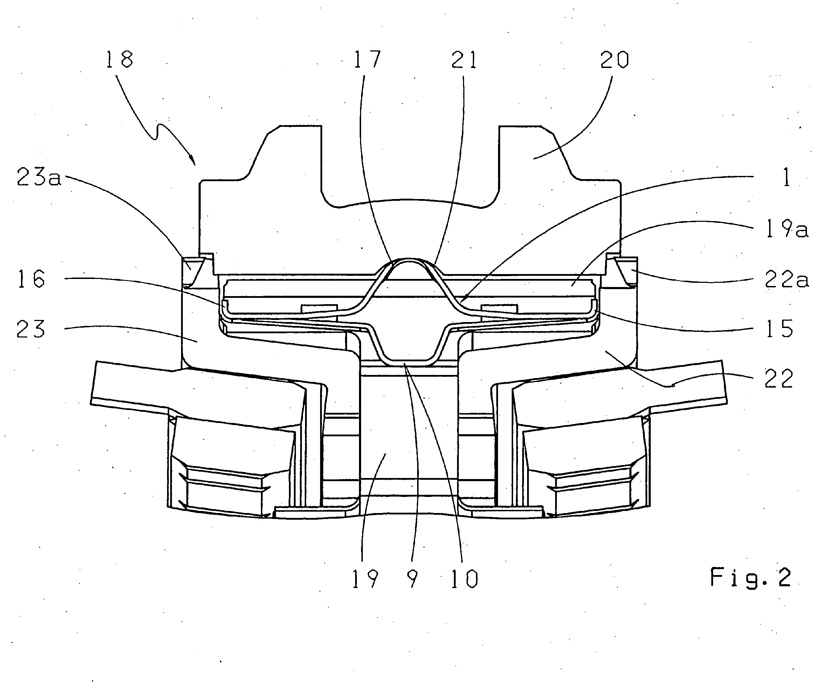

**Fig. 2** zeigt den Einbau der Druckstückeinheit 1 in eine teilweise dargestellte Synchronisiereinrichtung 18, wie sie prinzipiell aus dem eingangs genannten Stand der Technik bekannt ist; daher sind nur die wesentlichen, d. h. die mit der Druckstückeinheit 1 zusammenwirkenden Teile der Synchronisiereinrichtung 18 dargestellt. Die Druckstückeinheit 1 ist in Umfangsrichtung formschlüssig in einem Synchronkörper 19 aufgenommen - vorzugsweise sind drei Druckstückeinheiten 1 auf dem Umfang des Synchronkörpers 19 angeordnet. Auf dem Umfang des Synchronkörpers 19 ist über eine Außenverzahnung 19a eine Schiebemuffe 20 mit einer Innenverzahnung 20a drehfest und axial gleitend angeordnet. Die Druckstückeinheit 1 stützt sich einerseits - radial nach innen - mit ihren Auflageflächen 9; 10 am Synchronkörper 19 und andererseits elastisch über das ausgeprägte Rastelement 17 in einer entsprechenden Ausnehmung 21 in der Schiebemuffe 20 ab. In der dargestellten Position befinden sich das Rastelement 17 und die Schiebemuffe 20 in neutraler, d. h. eingerasteter Stellung. Beiderseits der Druckstückeinheit 1 sind als Reibkonen ausgebildete Synchronringe 22, 23 angeordnet, welche eine äußere Sperrverzahnung 22a, 23a aufweisen. Die Druckstückeinheit 1 stützt sich bei einer Axialbewegung der Schiebemuffe 20 über ihre Anlageflächen 15, 16 an den Synchronringen 22, 23 ab.

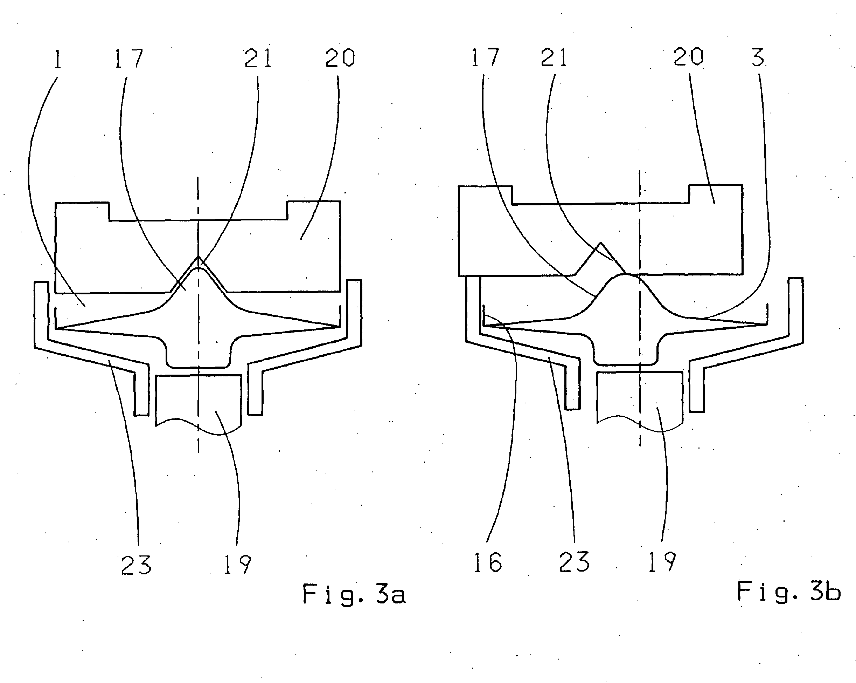

**Fig. 3a** zeigt eine schematische Darstellung der Druckstückeinheit 1 und der Schiebemuffe 20 in Neutralstellung, d. h. mit eingerastetem Rastelement 17.

**Fig. 3b** zeigt die die Schiebemuffe 20 (in der Zeichnung) nach links verschoben. Bei der Axialverschiebung der Schiebemuffe 20 aus ihrer Neutralstellung wird die Druckstückeinheit 1 zunächst mitgenommen und stützt sich dabei mittels der Anlagefläche 16 am Synchronring 23 ab. Dabei erfolgt eine Vorsynchronisierung. Bei weiterer Bewegung der Schiebemuffe 20 wandert die Ausprägung 17 aus der Vertiefung 21 aus, wobei das Federelement 3 elastisch nach unten einfedert, d. h. in Richtung Synchronkörper 19 gedrückt wird. Die Schiebemuffe 20 kann dann - was hier nicht dargestellt ist - in formschlüssigen Eingriff mit einer Kupplungsverzahnung des zu schaltenden Zahnrades gebracht werden.

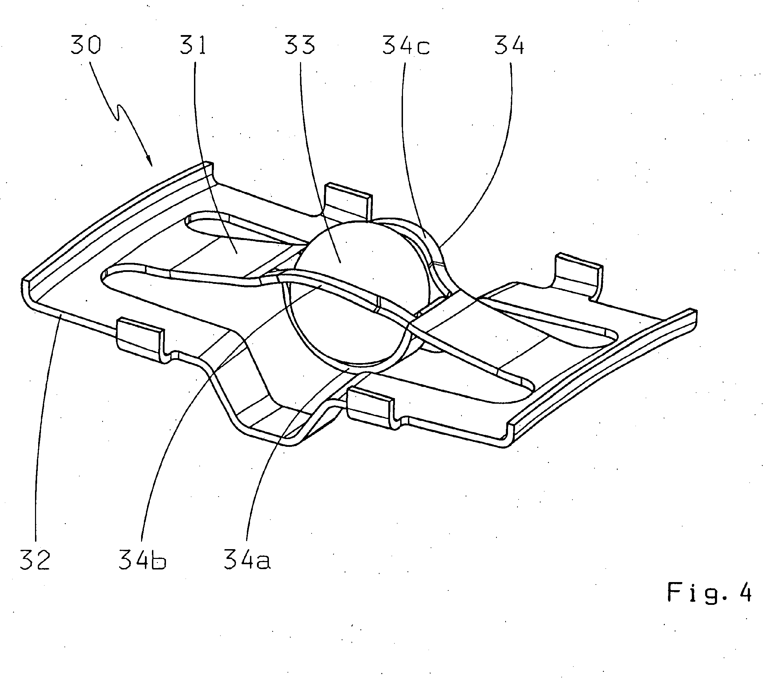

**Fig. 4** zeigt eine Druckstückeinheit 30, welche mit Ausnahme des Federelementes 31 dem Ausführungsbeispiel gemäß Fig. 1 (Druckstückeinheit 1) entspricht. Die Druckstückeinheit 30 ist bei diesem Ausführungsbeispiel zweiteilig ausgebildet, d. h. sie besteht aus dem eigentlichen Druckstück 32 mit Federelement 31 und einem zusätzlichen kugelförmig ausgebildeten Rastelement 33, welches von dem Federelement 31 - ebenfalls als Biegefeder ausgebildet - formschlüssig aufgenommen wird. Im Übrigen entspricht das Druckstück 32 - wie aus der Darstellung ersichtlich - dem Ausführungsbeispiel gemäß Fig. 1 für eine einstückige Druckstückeinheit 1. Übereinstimmende Merkmale sind daher in Fig. 4 nicht mit Bezugszahlen bezeichnet. Das Federelement 31 ist leicht nach oben ausgewölbt und bildet in seinem mittleren Bereich einen Käfig 34, welcher hier aus einer unteren, mittleren Strebe 34a und zwei seitlichen, nach oben ausgewölbten Streben 34b, 34c besteht. Damit ist das Kugelelement 33 formschlüssig im Federelement 31 aufgenommen und kann sich wie ein Wälzkörper drehen. Damit wird eine Verschleiß- und Reibminderung erreicht, was einen höheren Schaltkomfort zur Folge hat. Die Funktion des kugelförmigen Rastelementes 33, welches auch eine Zylinderform aufweisen kann, geht aus den nachfolgenden Zeichnungen hervor.

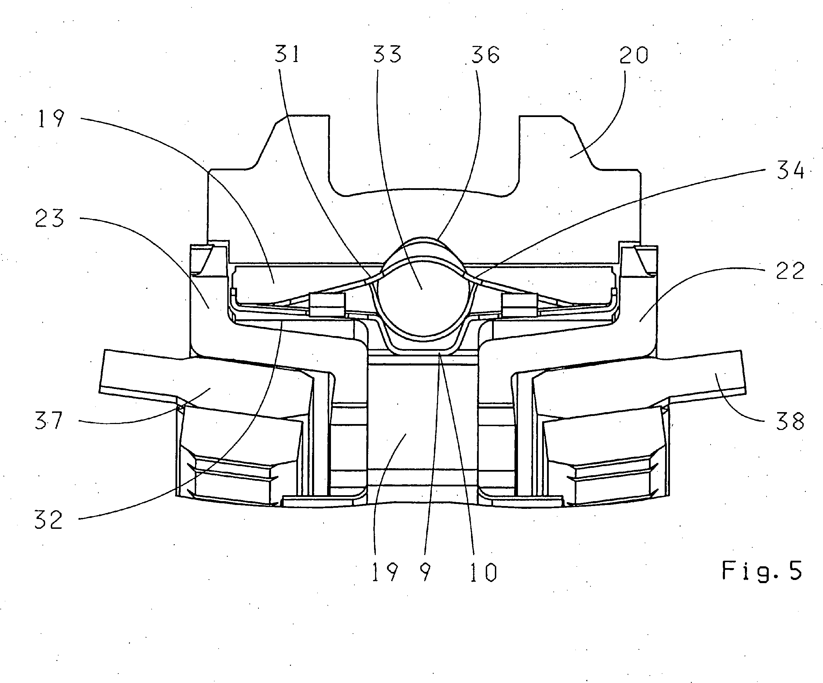

**Fig. 5** zeigt - analog zu Fig. 2 - den Einbau der Druckstückeinheit 30 mit rollbeweglichem Rastelement 33 in eine Synchronisiereinrichtung 35, wobei für gleiche Teile die gleichen Bezugszahlen wie in Fig. 2 verwendet werden. Die Schaltmuffe 20 weist eine kalottenförmige Vertiefung 36 auf, in welche das kugelförmige Rastelement 33 eingreift. Das Druckstück 32 liegt mit seinen Auflageflächen 9, 10 auf dem Synchronkörper 19 auf und drückt die Kugel 33 mittels des Käfigs 34 und des Federelementes 31 in die Vertiefung 36 - in dieser Position befindet sich die Schiebemuffe 20 in Neutralstellung. Die seitliche Abstützung des Druckstückes 32 gegenüber den beidseitig angeordneten Reibkonen bzw. Synchronringe 22, 23 erfolgt analog zu dem Ausführungsbeispiel gemäß Fig. 2. Die Synchronringe 22, 23 treten beim Synchronisationsvorgang jeweils in Reibkontakt mit einem Doppelkonusring 37, 38, welcher formschlüssig mit einem zu schaltenden, nicht dargestellten Zahnrad verbunden ist. Diese so genannte Doppelkonus-Synchronisierung ist aus dem Stand der Technik bekannt.

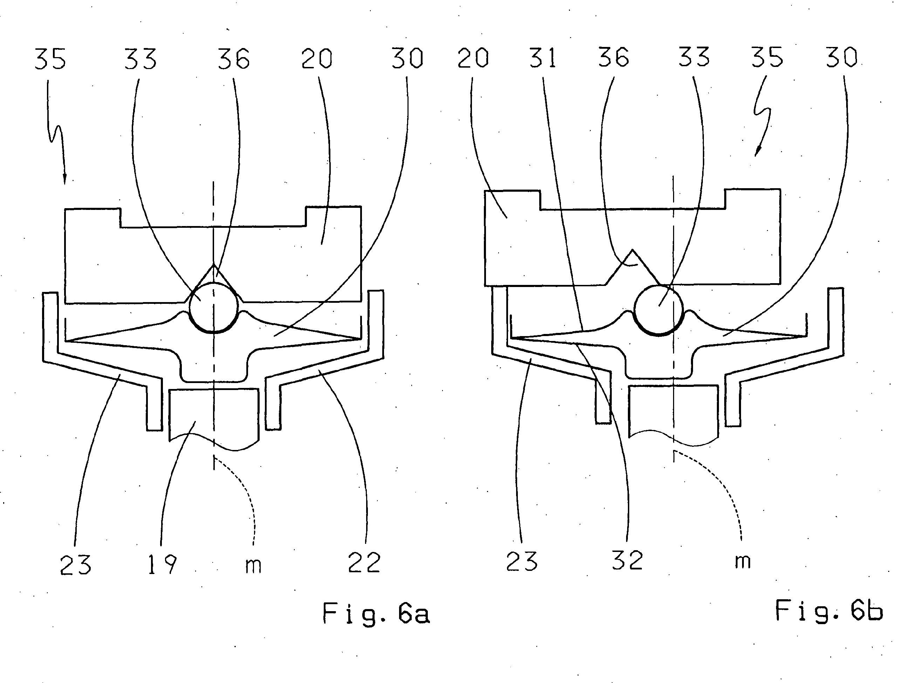

**Fig. 6a** zeigt die Synchronisiereinrichtung 35 und die Druckstückeinheit 30 gemäß Fig. 5 in schematischer Darstellung, und zwar in Neutralstellung der Schiebemuffe 20. Das kugelförmige Rastelement 33 befindet sich in Rastposition, d. h. in der kalottenförmigen Vertiefung 36 - symmetrisch zu einer Mittelebene m.

**Fig. 6b** zeigt eine schematische Darstellung der Synchronisiereinrichtung 35 mit aus der Mittelebene m in der Zeichnung nach links verschobener Schiebemuffe 20. Dabei wird die Druckstückeinheit 30 mitgenommen und gegen den in der Zeichnung links angeordneten Synchronring 23 gedrückt, der damit eine Vorsynchronisierung über den in Fig. 5 dargestellten Doppelkonusring 37 bewirkt. Nach dem Vor- bzw. Ansynchronisieren und Aufhebung der Sperre durch die Sperrverzahnung wird die Schiebemuffe 20 durchgeschaltet und stellt den gewünschten Formschluss her - diese Vorgänge sind im Einzelnen u. a. aus dem eingangs genannten Stand der Technik bekannt. Die Kugel 33 wandert aus der Kalotte 36 aus, wobei sie sich an der Kontur der Kalotte 36 reibungsmindemd abwälzt und die Feder 31 des Druckstückes 32 nach unten drückt. Damit wird das Schalten der Gänge komfortabler.

### Bezugszeichen

- 1: Druckstückeinheit
- 2: Blechstreifen
- 3: Federelement
- 4: Blechstreifen
- 5: Langloch
- 6: Langloch
- 7: Seitenstreifen
- 8: Seitenstreifen
- 9: Ausprägung
- 10: Ausprägung
- 11: Lappen
- 12: Lappen
- 13: Lappen
- 14: Lappen
- 15: Randstreifen
- 16: Randstreifen
- 17: Rastelement
- 18: Synchronisiereinrichtung
- 19: Synchronkörper
- 19a: Außenverzahnung
- 20: Schiebemuffe
- 20a: Innenverzahnung
- 21: Ausnehmung
- 22: Synchronring
- 22a: Sperrverzahnung
- 23: Synchronring
- 23a: Sperrverzahnung
- 30: Druckstückeinheit
- 31: Federelement
- 32: Druckstück
- 33: kugelförmiges Rastelement
- 34: Käfig
- 34a: untere, mittlere Strebe
- 34b: obere, seitliche Strebe
- 34c: obere, seitliche Strebe
- 35: Synchronisiereinrichtung
- 36: kalottenförmige Vertiefung
- 37: Doppelkonusring
- 38: Doppelkonusring

## Patentansprüche

1. Druckstückeinheit für eine Synchronisiereinrichtung, bestehend aus einem Druckstück, einem Federelement und einem Rastelement bei der das Druckstück (2, 4, 7, 8, 9, 10; 32) und das Federelement (3, 31) einstückig ausgebildet sind, bei der das Federelement (3, 31) als Bügel mit zwei Längsseiten und zwei Schmalseiten ausgebildet ist, wobei die Längsseiten ausgestanzt und die Schmalseiten mit dem Druckstück (7, 8) verbunden sind, wobei beiderseits des Bügels je ein äußerer durchgehender Blechstreifen angeordnet ist, **dadurch gekennzeichnet , dass** die beiden äußeren Blechstreifen trogartige Ausprägungen aufweisen, welche Auflageflächen der Druckstückeinheit bilden.

2. Druckstückeinheit nach Anspruch 1, **dadurch gekennzeichnet, dass** das Druckstück (2, 4, 7, 8, 9, 10; 32) und das Federelement (3, 31) aus Federstahl herstellbar sind.

3. Druckstückeinheit nach Anspruch 1 oder 2, **dadurch gekennzeichnet, dass** das Rastelement (17) einstückig mit dem Federelement (3) ausgebildet ist.

4. Druckstückeinheit nach Anspruch 3, **dadurch gekennzeichnet, dass** das Rastelement als konvexe Ausprägung (17) des Federelementes (3), insbesondere als Nase ausgebildet ist.

5. Druckstückeinheit nach Anspruch 3 oder 4, **dadurch gekennzeichnet, dass** das Rast- und Federelement (3, 17) eine zweiseitig eingespannte, gekröpfte Biegefeder bilden.

6. Druckstückeinheit nach einem der Ansprüche 1 oder 2, **dadurch gekennzeichnet, dass** das Rastelement als zusätzliches im Federelement (31) aufnehmbares, reibungs- und verschleißminderndes Teil, insbesondere als Wälzkörper (33) ausgebildet ist.

7. Druckstückeinheit nach Anspruch 6, **dadurch gekennzeichnet, dass** das Rastelement als Kugel (33) oder als Zylinder ausgebildet ist.

8. Druckstückeinheit nach Anspruch 6 oder 7, **dadurch gekennzeichnet, dass** das Rastelement (33) beweglich, insbesondere drehbar im Federelement (31) aufgenommen ist.

9. Druckstückeinheit nach Anspruch 6, 7 oder 8, **dadurch gekennzeichnet, dass** das Federelement (31) einen Käfig (34, 34a, 34b, 34c) zur Aufnahme des Rastelementes (33) aufweist.

10. Druckstückeinheit nach einem der Ansprüche 1 bis 9, **dadurch gekennzeichnet, dass** das Druckstück (2, 4, 7, 8; 32) seitliche Anschläge aufweist, die als aufgestellte Randstreifen (15, 16) ausgebildet sind.

11. Druckstückeinheit nach einem der Ansprüche 1 bis 10, **dadurch gekennzeichnet , dass** die äußeren Blechstreifen (2, 4) Abstützflächen aufweisen, die als Lappen (11, 12, 13, 14) aufgestellt sind.

12. Synchronisiereinrichtung für ein Schaltgetriebe, insbesondere für Kraftfahrzeuge mit einem Synchronkörper (19), einer Schiebemuffe (20), welche axial gleitend, jedoch drehfest auf dem Synchronkörper (19) angeordnet ist, mit mindestens einem Reibkonus (Synchronringe 22, 23) sowie einer aus einem Druckstück sowie einem Feder- und Rastelement bestehenden Druckstückeinheit (1, 30), welche im Synchronkörper (19) aufgenommen ist und mit der Schiebemuffe (20) in Wirkverbindung steht, **dadurch gekennzeichnet, dass** die Druckstückeinheit (1, 30) nach mindestens einem der vorhergehenden Ansprüche ausgebildet ist.

13. Synchronisiereinrichtung nach Anspruch 12, **dadurch gekennzeichnet, dass** die Druckstückeinheit (1, 30) über die seitlichen Anschläge (15, 16) an dem mindestens einen Reibkonus bzw. den Synchronringen (22, 23) in axialer Richtung abstützbar ist.

14. Synchronisiereinrichtung nach Anspruch 12 oder 13, insofern auf Anspruch 11 rückbezogen, **dadurch gekennzeichnet, dass** die Druckstückeinheit (1, 30) über die Lappen (11, 12, 13, 14) in Umfangsrichtung gegenüber dem Synchronkörper (19) abstützbar ist.

15. Synchronisiereinrichtung nach einem der Ansprüche 12 bis 14, **dadurch gekennzeichnet , dass** die Schiebemuffe (20) eine insbesondere kalottenförmig ausgebildete Vertiefung (21, 36) aufweist, in welcher das Rastelement (17, 33) mittels des Federelements (3, 31) einrastbar und abstützbar ist.

## Claims

1. Pressure-piece unit for a synchronizing device, comprising a pressure piece, a spring element and a latching element, in which pressure-piece unit the pressure piece (2, 4, 7, 8, 9, 10; 32) and the spring element (3, 31) are configured in one piece, in which pressure-piece unit the spring element (3, 31) is configured as a hoop with two longitudinal sides and two narrow sides, the longitudinal sides being stamped out and the narrow sides being connected to the pressure piece (7, 8), in each case one outer continuous sheet-metal strip being arranged on both sides of the hoop, **characterized in that** the two outer sheet-metal strips have trough-like embossments which form bearing faces of the pressure-piece unit.

2. Pressure-piece unit according to Claim 1, **characterized in that** the pressure piece (2, 4, 7, 8, 9, 10; 32) and the spring element (3, 31) can be produced from spring steel.

3. Pressure-piece unit according to Claim 1 or 2, **characterized in that** the latching element (17) is configured in one piece with the spring element (3).

4. Pressure-piece unit according to Claim 3, **characterized in that** the latching element is configured as a convex embossment (17) of the spring element (3), in particular as a lug.

5. Pressure-piece unit according to Claim 3 or 4, **characterized in that** the latching and spring elements (3, 17) form a bent-over leaf spring which is clamped in on two sides.

6. Pressure-piece unit according to either of Claims 1 and 2, **characterized in that** the latching element is configured as an additional part, in particular as a rolling body (33), which can be received in the spring element (31) and reduces friction and wear.

7. Pressure-piece unit according to Claim 6, **characterized in that** the latching element is configured as a ball (33) or as a cylinder.

8. Pressure-piece unit according to Claim 6 or 7, **characterized in that** the latching element (33) is received movably, in particular rotatably, in the spring element (31).

9. Pressure-piece unit according to Claim 6, 7 or 8, **characterized in that** the spring element (31) has a cage (34, 34a, 34b, 34c) for receiving the latching element (33).

10. Pressure-piece unit according to one of Claims 1 to 9, **characterized in that** the pressure piece (2, 4, 7, 8; 32) has lateral stops which are configured as erected edge strips (15, 16).

11. Pressure-piece unit according to one of Claims 1 to 10, **characterized in that** the outer sheet-metal strips (2, 4) have supporting faces which are erected as tabs (11, 12, 13, 14).

12. Synchronizing device for a change-speed gearbox, in particular for motor vehicles having a synchronizing body (19), a slider sleeve (20) which is arranged on the synchronizing body (19) in an axially sliding but rotationally fixed manner, having at least one friction cone (synchronizer rings 22, 23) and a pressure-piece unit (1, 30) which comprises a pressure piece and a spring and latching element, is received in the synchronizing body (19) and is operatively connected to the slider sleeve (20), **characterized in that** the pressure-piece unit (1, 30) is configured according to at least one of the preceding claims.

13. Synchronizing device according to Claim 12, **characterized in that** the pressure-piece unit (1, 30) can be supported in the axial direction on the at least one friction cone or the synchronizer rings (22, 23) via the lateral stops (15, 16).

14. Synchronizing device according to Claim 12 or 13, in so far as they refer back to Claim 11, **characterized in that** the pressure-piece unit (1, 30) can be supported in the circumferential direction via the tabs (11, 12, 13, 14) with respect to the synchronizing body (19).

15. Synchronizing device according to one of Claims 12 to 14, **characterized in that** the slider sleeve (20) has a depression (21, 36) which is, in particular, of dome-shaped configuration and in which the latching element (17, 33) can be latched and supported by means of the spring element (3, 31).

## Revendications

1. Poussoir pour un dispositif de synchronisation, se composant d'une pièce de poussée, d'un élément de ressort et d'un élément d'encliquetage, dans lequel la pièce de poussée (2, 4, 7, 8, 9, 10; 32) et l'élément de ressort (3, 31) sont réalisé en une seule pièce, dans lequel l'élément de ressort (3, 31) est réalisé sous la forme d'un étrier avec deux côtés longs et deux côtés courts, dans lequel les côtés longs sont estampés et les côtés courts sont reliés à la pièce de poussée (7, 8), dans lequel une bande de tôle continue extérieure est disposée de part et d'autre de l'étrier, **caractérisé en ce que** les deux bandes de tôle extérieures présentent des déformations en forme d'auge, qui forment des surfaces d'appui du poussoir.

2. Poussoir selon la revendication 1, **caractérisé en ce que** la pièce de poussée (2, 4, 7, 8, 9, 10; 32) et l'élément de ressort (3, 31) peuvent être fabriqués en acier à ressort.

3. Poussoir selon la revendication 1 ou 2, **caractérisé en ce que** l'élément d'encliquetage (17) est réalisé en une seule pièce avec l'élément de ressort (3) .

4. Poussoir selon la revendication 3, **caractérisé en ce que** l'élément d'encliquetage est réalisé sous la forme d'une empreinte convexe (17) de l'élément de ressort (3), en particulier sous la forme d'un ergot.

5. Poussoir selon la revendication 3 ou 4, **caractérisé en ce que** l'élément d'encliquetage et de ressort (3, 17) forme un ressort de flexion coudé, encastré des deux côtés.

6. Poussoir selon l'une quelconque des revendications 1 ou 2, **caractérisé en ce que** l'élément d'encliquetage est réalisé sous la forme d'une pièce additionnelle, en particulier sous la forme d'un corps roulant (33), réduisant le frottement et l'usure, amovible dans l'élément de ressort (31).

7. Poussoir selon la revendication 6, **caractérisé en ce que** l'élément d'encliquetage est réalisé sous la forme d'une bille (33) ou d'un cylindre.

8. Poussoir selon la revendication 6 ou 7, **caractérisé en ce que** l'élément d'encliquetage (33) est logé de façon mobile, notamment rotative, dans l'élément de ressort (31).

9. Poussoir selon la revendication 6, 7 ou 8, **caractérisé en ce que** l'élément de ressort (31) présente une cage (34, 34a, 34b, 34c) destinée à recevoir l'élément d'encliquetage (33).

10. Poussoir selon l'une quelconque des revendications 1 à 9, **caractérisé en ce que** la pièce de poussée (2, 4, 7, 8; 32) présente des butées latérales, qui sont réalisées sous la forme de bandes de bord relevées (15, 16).

11. Poussoir selon l'une quelconque des revendications 1 à 10, **caractérisé en ce que** les bandes de tôle extérieures (2, 4) présentent des surfaces d'appui, qui sont relevées en forme de pattes (11, 12, 13, 14).

12. Dispositif de synchronisation pour une boîte de vitesses, en particulier pour des véhicules automobiles, avec un manchon intérieur de synchroniseur (19), un manchon extérieur de synchroniseur (20), qui est disposé de façon axialement coulissante mais solidaire en rotation sur le manchon intérieur de synchroniseur (19), avec au moins un cône de synchronisation (bagues de synchronisation 22, 23) ainsi qu'un poussoir (1, 30) se composant d'une pièce de poussée ainsi que d'un élément de ressort et d'encliquetage, qui est logé dans le manchon intérieur de synchroniseur (19) et qui est en liaison active avec le manchon extérieur de synchroniseur (20), **caractérisé en ce que** le poussoir (1, 30) est réalisé selon au moins une des revendications précédentes.

13. Dispositif de synchronisation selon la revendication 12, **caractérisé en ce que** le poussoir (1, 30) peut être appuyé en direction axiale sur l'au moins un cône de synchronisation ou sur les bagues de synchronisation (22, 23) au moyen des butées latérales (15, 16).

14. Dispositif de synchronisation selon la revendication 12 ou 13, dans la mesure où elle se rapporte à la revendication 11, **caractérisé en ce que** le poussoir (1, 30) peut être appuyé en direction périphérique par rapport au manchon intérieur de synchroniseur (19) au moyen des pattes (11, 12, 13, 14).

15. Dispositif de synchronisation selon l'une quelconque des revendications 12 à 14, **caractérisé en ce que** le manchon extérieur de synchroniseur (20) présente un creux (21, 36) réalisé notamment en forme de calotte, dans lequel l'élément d'encliquetage (17, 33) peut être encliqueté et appuyé au moyen de l'élément de ressort (3, 31).
